# EUROPÄISCHE PATENTSCHRIFT

(11) **EP 4 027 508 B1**
(45) Veröffentlichungstag und Bekanntmachung des Hinweises auf die Patenterteilung: **26.08.2026**
(21) Anmeldenummer: 21150872.6
(22) Anmeldetag: 11.01.2021
(51) Int. Cl.: H02P 3/22, H02P 25/022, H02P 29/60, H02P 29/62, F03D 9/22, F03D 7/02, F03D 80/60

(54) **VERFAHREN ZUM BEHEIZEN EINES GENERATORS EINER WINDENERGIEANLAGE UND DIE WINDENERGIEANLAGE DAZU**
METHOD FOR HEATING A GENERATOR OF A WIND TURBINE AND THE WIND TURBINE THEREFOR
PROCÉDÉ DE CHAUFFAGE D'UN GÉNÉRATEUR D'UNE ÉOLIENNE ET ÉOLIENNE ASSOCIÉE

(43) Veröffentlichungstag der Anmeldung: 13.07.2022
(73) Patentinhaber: Wobben Properties GmbH, 26607 Aurich (DE)
(72) Erfinder: Jöckel, Stephan, 67259 Kleinniedesheim (DE); Heyen, Christian, 26607 Aurich (DE); Muik, Tobias, 64625 Bensheim (DE); Giengiel, Wojciech, 26607 Aurich (DE); Gertjegerdes, Stefan, 26603 Aurich (DE); Bakker, Menko, 26605 Aurich (DE); Vihriälä, Harri, 28865 Lilienthal (DE)
(74) Vertreter: Eisenführ Speiser

(56) Entgegenhaltungen:
- EP-A2- 2 270 331
- DE-A1- 102016 124 135

## Beschreibung

Die vorliegende Erfindung betrifft ein Verfahren zum Beheizen eines Generators einer Windenergieanlage, wobei der Generator ein Permanentmagnet-Synchrongenerator ist und die vorliegende Erfindung betrifft eine entsprechende Windenergieanlage.

Windenergieanlagen sind bekannt, sie erzeugen mittels eines Generators elektrische Leistung aus Wind. War die Windenergieanlage eine Zeit lang nicht im Betrieb, weil sie z.B. gewartet wurde oder nicht ausreichend Wind vorhanden war, so kann sie dabei abkühlen und an abgekühlten Bereichen kann Feuchtigkeit kondensieren. Wird dann die Windenergieanlage wieder in Betrieb genommen, so muss zunächst die Feuchtigkeit entfernt werden.

Dieses Problem ist bereits in der deutschen Offenlegungsschrift DE 101 19 625 A1 bzw. korrespondierenden Familienmitgliedern beschrieben worden. Als Lösung wird dort vorgeschlagen, den Generator zu beheizen. Dort weist die Windenergieanlage einen fremderregten Synchrongenerator auf. Zur Beheizung wird dort über die Anschlüsse zur Fremderregung der Generatorläufer mit einem vorgebbaren Erregerstrom beaufschlagt.

Bei einem Permanentmagnet-Synchrongenerator existieren aber keine Erregerwicklungen und damit kann ein solcher Generator auch nicht in der in der genannten Offenlegungsschrift beschriebenen Art und Weise beheizt werden. Der Permanentmagnet-Synchrongenerator kann auch nicht einfach mit geringerer Leistung betrieben werden, um ihn zunächst aufzuheizen, denn auch bei einem Betrieb der Windenergieanlage mit geringer Leistungsabgabe sind die Spannungen bereits auf normaler Höhe. Genau darin liegt das Problem des Kondensats an dem Generator, dass normale Betriebsspannung zu einem Kurzschluss an feuchten Stellen führen kann.

Die deutsche Offenlegungsschrift DE 10 2016 124 135 A1 betrifft das Beheizen eines Generators und ggf. weiterer Elemente durch seinen eigenen Strom, wobei der Generator als fremderregter Synchrongenerator ausgebildet ist.

Der vorliegenden Erfindung liegt somit die Aufgabe zu Grunde, zumindest eines der vorstehend beschriebenen Probleme zu adressieren. Insbesondere soll eine Lösung vorgeschlagen werden, einen abgekühlten Generator zu starten, ohne feuchtigkeitsbedingte Spannungsüberschläge zu riskieren, wenigstens soll ein solches Risiko möglichst minimiert werden. Zumindest soll zu bisher bekannten Lösungen eine alternative Lösung vorgeschlagen werden.

Erfindungsgemäß wird ein Verfahren nach Anspruch 1 vorgeschlagen. Das Verfahren betrifft somit das Beheizen eines Generators einer Windenergieanlage bei oder vor dem Starten der Windenergieanlage. Grundsätzlich wird das Verfahren zum Beheizen vor dem Starten eines normalen Betriebs der Windenergieanlage bzw. des Generators vorgeschlagen. Da dieses Verfahren zum Beheizen selbst aber schon als Teil des Startvorgangs angesehen werden könnte, kann es auch als Verfahren beim Starten bezeichnet werden.

Es wird hier ausgegangen von einem Generator, der ein Permanentmagnet-Synchrongenerator ist, was üblicherweise auch als PMG abgekürzt wird. Dieser ist dazu ausgebildet, einen Statorstrom zu erzeugen, wobei der Statorstrom wenigstens einen dreiphasigen Strom aufweist. Der Generator weist also wenigstens ein dreiphasiges System auf, kann aber beispielsweise auch zwei galvanisch voneinander getrennte dreiphasige Systeme aufweisen.

Außerdem ist die Windenergieanlage als getriebelose Windenergieanlage ausgebildet und an ein elektrisches Versorgungsnetz angeschlossen, zum Einspeisen elektrischer Leistung in das elektrische Versorgungsnetz. Eine getriebelose Windenergieanlage weist vielpolige Generatoren mit großem Durchmesser auf. Der Generator, nämlich sein Läufer, ist unmittelbar mit dem aerodynamischen Rotor der Windenergieanlage gekoppelt und dreht sich mit derselben Drehzahl. Der Generator ist also ein langsam laufender Generator. Die Drehzahlen liegen üblicherweise im Bereich von 7 bis 25 U/min.

Der Generator hat entsprechend eine große räumliche Ausdehnung. Sein Luftspaltdurchmesser kann im Bereich von 4 bis 10 m liegen. Entsprechend hat ein solcher Generator einer getriebelosen Windenergieanlage auch eine große Masse, die beheizt werden muss und zudem räumlich verteilt ist.

Die Windenergieanlage umfasst zudem einen Rotor mit Rotorblättern, der mit variabler Drehzahl betreibbar ist, und ein Umrichtersystem, das mit dem Generator verbunden ist, um den Generator zu steuern, und das mit dem elektrischen Versorgungsnetz verbunden ist, um elektrische Leistung, die von dem Generator erzeugt wurde, in das elektrische Versorgungsnetz einzuspeisen. Das Umrichtersystem kann synonym auch als Umrichtereinrichtung oder Umrichteranordnung bezeichnet werden. Insoweit hier von einem Rotor die Rede ist, ist somit grundsätzlich der aerodynamische Rotor der Windenergieanlage gemeint. Zur Abgrenzung wird der Rotor des Generators als Läufer bezeichnet. Jedenfalls ist der aerodynamische Rotor und damit die Windenergieanlage mit variabler Drehzahl betreibbar. Entsprechend ist auch der Generator mit variabler Drehzahl betreibbar. Somit ist es auch möglich, den Rotor und damit den Generator bei Bedarf mit einer geringen Drehzahl laufen zu lassen.

Das Umrichtersystem ist somit zwischen dem Generator und dem elektrischen Versorgungsnetz angeordnet und angeschlossen. Ein solches Umrichtersystem ist insbesondere so ausgebildet, dass es generatorseitig als auch netzseitig, also zum elektrischen Versorgungsnetz hin, als Wechselrichter ausgebildet ist. Es ist also ein generatorseitiger Wechselrichter vorgesehen, zum Steuern des Generators, nämlich zum Steuern des Statorstroms, und es ist ein netzseitiger Wechselrichter vorgesehen, zum Einspeisen elektrischer Leistung in das elektrische Versorgungsnetz. Diese beiden Wechselrichter können über einen Gleichspannungszwischenkreis gekoppelt sein. Der generatorseitige Wechselrichter kann auch als aktiver Gleichrichter bezeichnet werden, denn im normalen Betrieb erzeugt der Generator Leistung und gibt diese über ihren Statorstrom ab, der von dem generatorseitigen Wechselrichter beim Steuern des Generators gleichgerichtet wird.

Bei diesem Aufbau steuert der generatorseitige Wechselrichter somit im Betrieb den Statorstrom, was dazu führt, dass ein Gleichstrom in den Gleichspannungszwischenkreis fließt. Der netzseitige Wechselrichter steuert das Einspeisen in das elektrische Versorgungsnetz, was zu einer Entnahme eines Gleichstroms aus dem Gleichspannungszwischenkreis führt.

Das Verfahren umfasst nun die folgenden Schritte. Der Rotor wird mit einer niedrigen Drehzahl unterhalb einer ersten Drehzahlgrenze gedreht. Diese erste Drehzahlgrenze, die unten noch weiter beschrieben wird, kann im Bereich von 2,5 bis 4,5 U/min liegen. Das Drehen erfolgt mit Hilfe von Wind, der auf die Rotorblätter wirkt. Vorzugsweise werden die Rotorblätter dafür jeweils mit ihrem Blattwinkel in einen Heizblattwinkel verstellt, mit dem die niedrige Drehzahl, die auch als Heizdrehzahl bezeichnet werden kann, erreicht wird.

Das Umrichtersystem wird dann so betrieben, dass der Generator den Statorstrom und elektrische Leistung erzeugt. Außerdem wird das Umrichtersystem so betrieben, dass keine elektrische Leistung in das elektrische Versorgungsnetz eingespeist wird. Es wird dabei vorgeschlagen, dass der Statorstrom, zumindest ein Teil davon, im Wesentlichen durch den Generator und das Umrichtersystem zirkuliert, um Leistung wenigstens in Statorwindungen des Generators zu verbrauchen, um dadurch den Generator zu erwärmen.

Beispielsweise kann der Statorstrom durch einen generatorseitigen Wechselrichter gleichgerichtet und auf einen Gleichspannungszwischenkreis gegeben werden. Ein netzseitiger Wechselrichter kann den so gleichgerichteten Strom von einer positiven Gleichstromschiene zu einer negativen Gleichstromschiene des Gleichspannungszwischenkreises leiten, bspw. in Form eines Kurzschlusses durch das Schließen entsprechender Halbleiterschalter. An der negativen Sammelschiene steht dieser Strom dem generatorseitigen Wechselrichter dann wieder zur Verfügung, um dadurch den Kreis zu schließen.

Hierbei ist natürlich zu beachten, dass der Statorstrom nicht in Form eines einzigen Gleichstroms zirkuliert. Es ist vielmehr so, dass der Statorstrom, der auch hierbei im Generator und an seinen Anschlussklemmen wenigstens einmal dreiphasig ist, in dem Umrichtersystem umgewandelt wird, nämlich in dem vorstehend genannten Beispiel in einen Gleichstrom. Insoweit zirkuliert der Statorstrom in einer umgewandelten Form weiter. Es kommt aber auch in Betracht, dass der Statorstrom nur bis zu einem generatorseitigen Wechselrichter bzw. aktivem Gleichrichter fließt und dort in Art einer Stern- oder Dreieckschaltung kurzgeschlossen wird und damit durch diesen generatorseitigen Wechselrichter zirkuliert und damit auch durch einen Teil des Umrichtersystems und damit durch das Umrichtersystem zirkuliert. Der generatorseitige Wechselrichter wird allerdings meist keine vollständige Stern- oder Dreieckschaltung schalten, sondern vielmehr den Statorstrom auch in seiner Höhe weiterhin steuern.

Gemäß einem Aspekt wird vorgeschlagen, dass das Umrichtersystem einen aktiven Gleichrichter und einen Wechselrichter umfasst. Der aktive Gleichrichter ist zwischen dem Generator und einem Gleichspannungszwischenkreis verbunden, zum Steuern des Generators und zum Gleichrichten des Statorstromes in einen Gleichstrom zum Einspeisen in den Gleichspannungszwischenkreis, der eine Zwischenkreisspannung aufweist. Der Gleichspannungszwischenkreis ist damit auch Teil des Umrichtersystems.

Der Wechselrichter ist mit dem Gleichspannungszwischenkreis verbunden, um Energie aus dem Gleichspannungszwischenkreis in einen Wechselstrom zum Einspeisen in das elektrische Versorgungsnetz wechselzurichten. Dieser Wechselrichter kann auch als netzseitiger Wechselrichter bezeichnet werden und der aktive Gleichrichter kann synonym als generatorseitiger Wechselrichter bezeichnet werden. Zur Vermeidung von Verwechslungen wird aber bevorzugt der Begriff des aktiven Gleichrichters für den generatorseitigen Wechselrichter verwendet. Als Wechselrichter wird hier grundsätzlich der netzseitige Wechselrichter bezeichnet, sofern nichts anderes angegeben ist.

Es wird nun vorgeschlagen, dass der Wechselrichter so betrieben wird, dass der Gleichspannungszwischenkreis zumindest teilweise kurzgeschlossen ist, oder der aktive Gleichrichter so betrieben wird, dass Phasen des Statorstromes zumindest zeitweise kurzgeschlossen sind. Dadurch werden zwei Möglichkeiten vorgeschlagen, den Statorstrom durch das Umrichtersystem zirkulieren zu lassen, nämlich entweder an dem aktiven Gleichrichter oder an dem Wechselrichter. An dem Wechselrichter kommt in Betracht, dass der Gleichspannungszwischenkreis dauerhaft, aber natürlich nur für die Zeit des Heizvorgangs kurzgeschlossen ist. Die Stromhöhe kann dann trotzdem durch den aktiven Gleichrichter gesteuert werden. Mit anderen Worten hängt der Kurzschlussstrom, der hier von einer positiven zur negativen Sammelschiene des Gleichstromzwischenkreises fließen kann, davon ab, wieviel Gleichstrom der aktive Gleichrichter aus dem Statorstrom bereitstellt.

Auch bei dem aktiven Gleichrichter kommt in Betracht, dass dieser dauerhaft die Phasen des Statorstroms, insbesondere jeweils die Phasen eines dreiphasigen Systems kurzschließt. Bevorzugt wird aber die Variante, dass der aktive Gleichrichter hier auch für das beschriebene Kurzschließen dies durch ein Pulsmuster steuert, sodass der aktive Gleichrichter weiterhin den Statorstrom gezielt steuern kann. Ein solches gepulstes Kurzschließen kann somit als zeitweises Kurzschließen bezeichnet werden.

Besonders dann, wenn der aktive Gleichrichter nur gepulst kurzschließt, kann er gleichzeitig einen Gleichstrom für den Gleichspannungszwischenkreis zur Verfügung stellen, und das Kurzschließen am Wechselrichter kann dann mit dem Kurzschließen am aktiven Gleichrichter kombiniert werden. Das hat besonders den Vorteil, dass nicht nur in dem Generator durch den zirkulierenden Statorstrom eine Erwärmung stattfindet und dort dem Kondensat entgegenwirkt, sondern dass auch das Umrichtersystem an den entsprechenden Stellen, also am aktiven Gleichrichter und/oder am Wechselrichter erwärmt und von etwaigem Kondensat befreit werden kann.

Erfindungsgemäß wird vorgeschlagen, dass zum Beheizen der Generator durch das Umrichtersystem unter Verwendung einer Feldschwächungssteuerung gesteuert wird, um einen Generatormoment unterhalb eines vorbestimmten ersten Drehmomentgrenzwertes zu steuern, der unterhalb eines Nennmomentes des Generators liegt, wobei das Nennmoment wenigstens um den Faktor 2, insbesondere wenigstens um den Faktor 10 größer als der vorbestimmte erste Drehmomentgrenzwert ist. Das Drehmoment bei Feldschwächung ist also signifikant niedriger als das Nennmoment des Generators. Es wird hier also eine sog. Feldschwächung angewendet. Dieser Begriff stammt ursprünglich von der Steuerung eines Gleichstrommotors, bei dem ein Ankerstrom und ein Feldstrom eingestellt werden kann. Wird der Feldstrom verringert, verringert sich das Drehmoment und die Drehzahl steigt bzw. im Falle eines Generators sinkt der erzeugte Strom bei gleicher Drehzahl.

Obwohl ein Permanentmagnetsynchrongenerator auf einem anderen Funktionsprinzip beruht, kann hier trotzdem eine Feldschwächung durchgeführt werden. Besonders kann ein solcher Synchrongenerator durch ein Modell beschrieben werden, in dem eine solche Feldschwächung möglich ist. Es wird vorgeschlagen, dass das Generatordrehmoment hierbei zumindest so stark reduziert wird, dass es maximal halb so groß wie ein Kurzschlussstrommoment des Generators bei selber Drehzahl ist.

Gemäß einem Aspekt wird vorgeschlagen, dass eine solche Feldschwächung besonders dadurch umgesetzt werden kann, dass zum Steuern des Generators dieser durch Implementieren einer sog. d/q-Steuerung gesteuert wird. Der Generator bzw. der zu steuernde Statorstrom wird dafür in ein rotierendes Bezugssystem transformiert, in dem er ähnlich wie ein Gleichstrommotor bzw. in Analogie dazu beschrieben werden kann. Durch die d-Komponente kann dann das Magnetfeld gesteuert bzw. eingestellt werden.

Deswegen wird außerdem oder alternativ vorgeschlagen, dass der Generator durch Implementieren einer d/q-Steuerung gesteuert wird, die eine d-Komponente und eine q-Komponente in einem rotierenden Bezugssystem vorgibt, wobei die d-Komponente zum Steuern eines Magnetfeldes des Generators verwendet wird, und wobei die d-Komponente so ausgewählt wird, dass sie das Magnetfeld reduziert, insbesondere so, dass die d-Komponente auf einen negativen Wert eingestellt wird. Beim Steuern eines permanenterregten Synchrongenerators ohne Feldschwächung ergibt sich in einem stationären Betriebszustand jeweils in dem rotierenden Bezugssystem ein normales Magnetfeld. Demgegenüber wird das Magnetfeld reduziert. Insbesondere kann hierzu die d-Komponente auf einen negativen Wert eingestellt werden.

Durch die vorgeschlagene Feldschwächung bzw. Reduzierung des Magnetfelds in der d/q-Steuerung kann der Läufer des Generators mit weniger Kraft gedreht werden. Der aerodynamische Rotor der Windenergieanlage kann also mit geringem Drehmoment gedreht werden. Dadurch wird erreicht, dass eine aerodynamisch sinnvolle Drehzahl gedreht werden kann, ohne dass viel Leistung erzeugt wird und insbesondere ohne dass eine hohe Spannung erzeugt wird. Das kann dadurch erreicht werden, dass der Statorstrom bei geringer Spannung durch den Generator und das Umrichtersystem zirkuliert.

Gemäß einem Aspekt wird vorgeschlagen, dass in einem Startschritt, während der Rotor mit der niedrigen Drehzahl betrieben wird, eine Generatorspannung auf einen niedrigen Wert unterhalb eines ersten Generatorspannungsgrenzwertes gesteuert wird, und/oder der Gleichspannungszwischenkreis so betrieben wird, dass er einen mittleren Zwischenkreisspannungswert aufweist, der unterhalb eines ersten und oberhalb eines zweiten vorbestimmbaren Zwischenkreisspannungsgrenzwertes liegt. Das Starten des Beheizens wird somit so durchgeführt, dass zunächst eine möglichst niedrige Spannung angelegt wird, also eine niedrige Generatorspannung, oder eine niedrige Zwischenkreisspannung, die aber größer als null sein soll, damit der Generator durch den aktiven Gleichrichter angesteuert werden kann. Daher wird für die Zwischenkreisspannung ein mittlerer Zwischenkreisspannungswert vorgeschlagen. Dieser liegt zwischen einem ersten und einem zweiten vorbestimmbaren Zwischenkreisspannungsgrenzwert. Der erste also obere Zwischenkreisspannungsgrenzwert kann im Bereich von 40 bis 60% und der untere, also zweite Zwischenkreisspannungsgrenzwert kann im Bereich von 30 bis 40% einer Nennspannung des Gleichspannungszwischenkreises, also der Zwischenkreisspannung liegen. Damit ist dieser Wert noch vergleichsweise gering, aber ausreichend groß, um den Generator auch zur Leistungsabgabe anzusteuern.

Als Generatorspannung wird hier besonders die Spannung am Ausgang des Stators des Generators verstanden, die somit auch als Statorspannung bezeichnet werden kann.

Gemäß einem Aspekt wird ein Chopper-Schritt vorgeschlagen. Dieser wird durchgeführt, während der Rotor weiterhin mit der niedrigen Drehzahl dreht. Es wird darauf hingewiesen, dass sowohl hier als auch in den übrigen Fällen, wenn der Rotor mit niedriger Drehzahl dreht bzw. gedreht wird, diese Drehzahl nicht unbedingt auf einem konstanten Wert gehalten werden muss. Zumindest leichte Schwankungen sind hinnehmbar.

In diesem Chopper-Schritt wird eine Chopperschaltung des Gleichspannungszwischenkreises dazu betrieben, die Zwischenkreisspannung abzusenken, nämlich auf einen niedrigen Zwischenkreisspannungswert unterhalb des zweiten vorgebbaren Zwischenkreisspannungsgrenzwertes, insbesondere unterhalb eines dritten vorgebbaren Zwischenkreisspannungsgrenzwertes. Dieser dritte vorgebbare Zwischenkreisspannungsgrenzwert ist kleiner, insbesondere deutlich kleiner als der zweite vorgebbare Zwischenkreisspannungsgrenzwert.

In dem Choppper-Schritt wird also die Zwischenkreisspannung abgesenkt, ggf. sogar auf null, oder fast null. Dies ist möglich, nachdem der Generator bereits in Betrieb ist und einen Generatorstrom erzeugt und auch ein entsprechendes Generatorfeld aufgebaut hat. Das ist also besonders nach dem vorstehend beschriebenen Startschritt möglich.

Insbesondere wird der Chopper-Schritt so ausgeführt, dass die Chopperschaltung einen Chopper-Strom aus dem Gleichspannungszwischenkreis zu einem Chopper-Widerstand steuert, um dadurch Energie aus dem Gleichspannungszwischenkreis in den Chopper-Widerstand abzuführen. Dabei verwendet die Chopperschaltung eine Pulsmodulation, bei der sich in einer Periodendauer eine Pulsdauer mit einer pulsfreien Zeit abwechselt, um den Chopper-Strom durch Einstellen eines Pulsverhältnisses zu steuern. Das Pulsverhältnis ist ein Verhältnis der Pulsdauer zur Periodendauer. Dazu wird vorgeschlagen, dass in dem Chopper-Schritt das Pulsverhältnis erhöht wird, um dadurch die Zwischenkreisspannung zu senken. Insbesondere wird das Pulsverhältnis sukzessive von 0% auf etwa 100% erhöht.

Ein Pulsverhältnis von 100% entspricht dabei einer dauerhaften Einschaltung. Die Zwischenkreisspannung fällt dann auf die Spannung ab, die sich durch den Chopper-Strom an dem Chopper-Widerstand und dem Chopperschalter einstellt. Der Generator kann nun in einem Betriebspunkt mit sehr niedriger Spannung betrieben werden.

Gemäß einem Aspekt wird ein Feldschwächungsschritt vorgeschlagen, in dem der Rotor weiterhin mit der niedrigen Drehzahl dreht, die Zwischenkreisspannung auf einen Nullwert gesteuert wird, der nahe null liegt, insbesondere unter Verwendung der Chopperschaltung, und der Generator durch das Umrichtersystem unter Verwendung einer bzw. der Feldschwächungssteuerung gesteuert wird, um den Generator wenig Leistung erzeugen zu lassen, um die Steuerung der Zwischenkreisspannung auf den Nullwert nahe null zu unterstützen. Der Generator wird dann also in diesem Zustand der Feldschwächung betrieben, indem er etwas Leistung erzeugt, die Spannung aber sehr gering ist. Dies kann durch die Chopperschaltung erreicht werden und auch durch den beschriebenen Betrieb des Generators. Durch die Feldschwächung wird nämlich erreicht, dass der Generator wenig Leistung erzeugt und daher der Gleichspannungszwischenkreis nicht stark aufgeladen werden kann und damit die Chopperschaltung die Zwischenkreisspannung etwa auf null halten kann. Der Nullwert unterscheidet sich von null im Grunde nur durch vernachlässigbare Effekte, wie die Durchlassspannung eines Halbleiterschalters, der den Chopperstrom steuert. Der Nullwert kann synonym auch als Wert nahe null bezeichnet werden.

Gemäß einem Aspekt wird ein Null-Modus-Schritt vorgeschlagen, in dem, während der Rotor weiterhin mit der niedrigen Drehzahl dreht, und während die Zwischenkreisspannung auf den Nullwert nahe null gesteuert wird, ein bzw. der Wechselrichter, der mit dem Gleichspannungszwischenkreis verbunden ist, in einen Null-Modus geschaltet wird. Der Null-Modus ist dadurch definiert, dass von wenigstens einem Halbleiterschalterpaar beide Halbleiterschalter geschlossen werden, um dadurch den Gleichspannungszwischenkreis kurzzuschließen. In dem Null-Modus-Schritt wird weiter vorgeschlagen, dass die Windenergieanlage in dem Null-Modus betrieben wird, um wenigsten den Generator zu beheizen.

Ein Null-Modus kann synonym auch als Zero-Mode beschrieben werden. Er beschreibt im Grunde einen bestimmten Modus des Wechselrichters. Der Wechselrichter weist für jede Phase ein Halbleiterschalterpaar auf, das in Reihe geschaltet ist und durch eine entsprechende Pulsmodulation einen sinusförmigen Strom der betreffenden Phase erzeugen kann. Dieser wird dabei im Grunde an einem Abgriff zwischen diesen beiden Halbleiterschaltern erzeugt. Zur Modulation erzeugt - etwas vereinfacht ausgedrückt - der eine Halbleiterschalter durch Modulation eine positive Halbwelle eines Sinussignals und der andere Halbleiterschalter entsprechend eine negative Halbwelle des Sinussignals. Dabei sind beide Halbleiterschalter nicht zugleich geschlossen.

Im Null-Modus wird aber vorgeschlagen, dass beide Halbleiterschalter zugleich geschlossen sind, was auch dauerhaft vorgesehen sein kann, jedenfalls für die Dauer der Beheizung. Diese beiden Halbleiterschalter bzw. das Halbleiterschalterpaar bildet somit einen Kurzschluss für den Gleichspannungszwischenkreis. Es wird also die positive Sammelschiene mit der negativen Sammelschiene kurzgeschlossen. Insoweit kann dieser Modus synonym auch als Kurzschlussmodus bezeichnet werden.

Der Wechselrichter, der üblicherweise einen dreiphasigen Strom zum Einspeisen in das elektrische Versorgungsnetz erzeugt, weist daher üblicherweise drei Halbleiterschalterpaare auf, nämlich je ein Paar pro Phase. In dem Null-Modus könnten auch alle Schalter dieser drei Paare geschlossen sein. Da aber im Vergleich zum Nennbetrieb vergleichsweise wenig Leistung erzeugt wird, wird es meist ausreichen, nur die Halbleiterschalter eines Paares zu schließen.

In diesem Zustand kann die Windenergieanlage dann dauerhaft betrieben werden, um wenigstens den Generator zu beheizen. Die Anlage kann solange betrieben werden, bis das genannte Kondensat ausreichend verdunstet ist, oder ein solcher Zustand zumindest angenommen werden kann. Da ein solcher Strom in dem Null-Modus auch Wärme in dem Wechselrichter und auch dem aktiven Gleichrichter erzeugt, kann somit das Umrichtersystem ebenfalls dadurch beheizt werden.

Gemäß einem Aspekt wird vorgeschlagen, dass der Startschritt, der Chopper-Schritt, der Feldschwächungsschritt und der Null-Modus-Schritt in dieser Reihenfolge nacheinander ausgeführt werden. Dadurch kann ein effektives Verfahren zum Beheizen des Generators und auch des Umrichtersystems vor dem Starten, also insbesondere bei aufkommendem Wind, durchgeführt werden.

In dem Startschritt wird somit dieser Heizbetrieb vorbereitet, in dem der Generator zunächst mit wenig Leistungserzeugung betrieben wird. Die Zwischenkreisspannung ist dabei noch nicht null oder nahe null, aber trotzdem klein auf einem mittleren Niveau. Diese Spannung bildet aber auch für den Generator, nämlich seine Generatorspannung, eine Art Gegenspannung, sodass nicht viel Strom fließen kann, zumal der Rotor sich nur langsam dreht.

In dem Chopper-Schritt wird die Zwischenkreisspannung und damit auch die Gegenspannung nach und nach reduziert. Jetzt kann ein höherer Strom vom Generator erzeugt werden.

Um diesen Strom nicht zu groß werden zu lassen, bzw. wenig Leistung erzeugen zu lassen, wird der Feldschwächungsschritt durchgeführt. Der Generator erzeugt nun wenig Leistung. Aufgrund der geringen Zwischenkreisspannung, die auf null oder fast null gesteuert wird, kann ein entsprechend geringer Strom auch in den Gleichspannungszwischenkreis fließen. Noch wird dieser über den Chopper-Widerstand durch die Chopperschaltung abgeleitet.

In dem Null-Modus-Schritt wird aber der Wechselrichter so angesteuert, dass der Gleichspannungszwischenkreis kurzgeschlossen wird. Die Ableitung des erzeugten und in den Gleichspannungszwischenkreis eingespeisten Stromes über den Chopper-Widerstand ist jetzt nicht mehr nötig. Die Umschaltung in den Null-Modus, also das Kurzschließen des Gleichspannungszwischenkreises mittels des Wechselrichters konnte aber erst durchgeführt, nachdem die Zwischenkreisspannung auf null abgefallen war, oder nahe null.

Es ist zu bemerken, dass im normalen Betrieb der Windenergieanlage, also nicht im beschriebenen Verfahren zum Beheizen des Generators, die Zwischenkreisspannung einen Wert etwa von 1200V aufweisen kann. Moderne Halbleiterschalter, insbesondere IGBTs, die eingesetzt werden können, weisen Durchlassspannungen im Bereich von etwa 1 V auf. Bei zwei Halbleiterschaltern in Reihe ergeben sich also etwa 2 V. Die Zwischenkreisspannung muss natürlich größer als dieser Wert sein, sonst kann kein Strom fließen. Aber im Vergleich zu den genannten 1200V können diese wenigen Volt als 0 V angesehen werden. Daher wird dieser Wert der Zwischenkreisspannung als Nullwert oder Wert nahe null bezeichnet. Das Steuern der Zwischenkreisspannung auf 0 V kann somit ein Steuern auf einen Wert von weniger als 2%, insbesondere weniger als 1% einer nominellen Zwischenkreisspannung bilden.

Vorzugsweise können der Chopper-Schritt und der Feldschwächungsschritt überlappend ausgeführt werden. Während also in dem Chopper-Schritt die Zwischenkreisspannung noch nach und nach auf null reduziert wird bzw. das Pulsverhältnis noch auf 100% am ansteigen ist, kann bereits mit dem Feldschwächungsschritt begonnen werden.

Gemäß einem Aspekt findet wenigstens ein Merkmal der folgenden Auflistung Anwendung.

Als ein Merkmal wird vorgeschlagen, dass die erste Drehzahlgrenze im Bereich von 20 bis 50% einer Nenndrehzahl des Rotors, und damit also einer Nenndrehzahl der Windenergieanlage liegt. Außerdem oder alternativ liegt die erste Drehzahlgrenze im Bereich von 2,5 bis 4,5 U/min, insbesondere im Bereich von 3 bis 4 U/min. Die Drehzahl ist damit signifikant kleiner als im Nennbetrieb der Windenergieanlage. Das gilt auch für die absolut genannten Werte. Dazu ist zu beachten, dass die Generatorleistung üblicherweise überproportional mit der Drehzahl ansteigt. Bei diesen vergleichsweise geringen Drehzahlwerten, die für den Heizbetrieb zudem nur eine Obergrenze bilden, sind somit bezogen auf eine Nennleistung noch deutlich geringere Leistungswerte zugeordnet. Durch den beschriebenen Betrieb der Feldschwächung ist die erzeugte Leistung dann noch geringer. Dadurch kann ein Betrieb der Windenergieanlage gewährleistet werden, der nur so viel Leistung erzeugt, wie zum Beheizen benötigt wird, um das genannte Kondensat verdunsten zu lassen.

Als ein weiteres Merkmal wird vorgeschlagen, dass der erste Generatorspannungsgrenzwert in einem Bereich von 30% bis 70% einer Generatornennspannung liegt. Insbesondere liegt er in einem Bereich von 200V bis 500V, insbesondere in einem Bereich von 300V bis 400V. Die Generatorspannung liegt also unter diesem Wert und damit kann ein Anlaufen des Generators zum Beheizen bei geringer Drehzahl ermöglicht werden, bei dem der Generator eine Leistung erzeugt, ohne aber eine gefährlich hohe Spannung zu erzeugen.

Als ein weiteres Merkmal wird vorgeschlagen, dass der erste vorbestimmbare Zwischenkreisspannungsgrenzwert in einem Bereich von 40% bis 60% einer Nennzwischenkreisspannung liegt, und/oder in einem Bereich von 400V bis 700V. Das markiert somit die obere Grenze für die mittlere Zwischenkreisspannung, die zu Beginn des Heizvorgangs eingestellt sein kann, die dann aber reduziert wird. Auch dieser Wert gewährleistet eine Spannung, bei der der Generator anlaufen kann, ohne aber gefährliche Spannung zu erzeugen.

Gemäß einem Aspekt wird vorgeschlagen, dass der zweite vorbestimmbare Zwischenkreisspannungsgrenzwert in einem Bereich von 30% bis 40% einer Nennzwischenkreisspannung liegt, und/oder in einem Bereich von 300V bis 400V. Dies markiert besonders den Wert der Zwischenkreisspannung, oberhalb dessen die Zwischenkreisspannung liegt, wenn der Generator am Anfang im Startschritt in Betrieb genommen wird. Dadurch kann dieser Anlauf, der eine gewisse Spannung benötigt, gewährleistet werden.

Außerdem oder alternativ wird vorgeschlagen, dass der dritte vorbestimmbare Zwischenkreisspannungsgrenzwert in einem Bereich von 5% bis 20% der Nennzwischenkreisspannung liegt, und/oder in einem Bereich von 50 bis 200V. Dieser dritte vorbestimmbare Zwischenkreisspannungsgrenzwert ist ein oberer Wert, unter den im Chopper-Schritt und im Feldschwächungsschritt die Zwischenkreisspannung abgesenkt wird. Dies ist somit ein sehr geringer Wert, mit dem eine Spannungsgefährdung ausgeschlossen werden kann und der besonders auch geeignet ist, den Null-Modus einzuleiten oder zumindest vorzubereiten.

Außerdem oder alternativ wird vorgeschlagen, dass ein bzw. der Nullwert kleiner als der dritte vorbestimmbare Zwischenkreisspannungsgrenzwert ist, insbesondere kleiner als 2%, insbesondere kleiner als 1% der Nennzwischenkreisspannung, und/oder kleiner als 20V, insbesondere kleiner als 10V ist. Hier wird eine sehr geringe Spannung, die fast den Wert null aufweisen soll, im Gleichspannungszwischenkreis vorgeschlagen, damit der Wechselrichter einen Kurzschluss in diesem Gleichspannungszwischenkreis schalten und erhalten kann.

Gemäß einem Aspekt wird vorgeschlagen, dass zum Beheizen des Generators die Windenergieanlage, insbesondere das Umrichtersystem, von dem elektrischen Versorgungsnetz getrennt ist. Insbesondere wird hier eine galvanische Trennung durch einen entsprechenden Trennschalter vorgesehen. Dadurch wird verhindert, dass Spannungshöhen aus dem elektrischen Versorgungsnetz bis in das Umrichtersystem, oder sogar bis zum Generator reichen, bevor das Kondensat verdunstet ist. Es wird auch verhindert, dass die spezielle Betriebsart zum Beheizen, insbesondere der Null-Modus des Wechselrichters, auf eine Netzspannung treffen. Auch andere der vorgeschlagenen Schritte sind nicht geeignet, dass sie mit einer Netzspannung in Berührung kommen.

Außerdem unterstreicht dieser Aspekt, dass das Verfahren zum Beheizen des Generators ohne Energie aus dem elektrischen Versorgungsnetz auskommt.

Erfindungsgemäß wird auch eine Windenergieanlage vorgeschlagen. Diese ist vorbereitet zum Beheizen eines Generators einer Windenergieanlage bei oder vor dem Starten der Windenergieanlage. Dazu ist eine Anlagensteuerung vorgesehen, auf der ein Verfahren zum Beheizen implementiert ist, wobei
- der Generator ein Permanentmagnet-Synchrongenerator (PMG) ist, der dazu ausgebildet ist, einen Statorstrom zu erzeugen, wobei der Statorstrom wenigstens einen dreiphasigen Strom aufweist, und
- die Windenergieanlage als getriebelose Windenergieanlage ausgebildet ist und an ein elektrisches Versorgungsnetz angeschlossen ist, zum Einspeisen elektrischer Leistung in das elektrische Versorgungsnetz, und die Windenergieanlage umfasst:
   - einen Rotor mit Rotorblättern, der mit variabler Drehzahl betreibbar ist,
   - ein Umrichtersystem,
      - das mit dem Generator verbunden ist, um den Generator zu steuern, und
      - das mit dem elektrischen Versorgungsnetz verbunden ist, um elektrische Leistung, die von dem Generator erzeugt wurde, in das elektrische Versorgungsnetz einzuspeisen, und
   das Verfahren umfasst
- Drehen des Rotors mit einer niedrigen Drehzahl unterhalb einer ersten Drehzahlgrenze
- Betreiben des Umrichtersystems so, dass
   - der Generator den Statorstrom und elektrische Leistung erzeugt, und
   - keine elektrische Leistung in das elektrische Versorgungsnetz eingespeist wird, wobei
   - der Statorstrom, zumindest ein Teil davon, im Wesentlichen durch den Generator und das Umrichtersystem zirkuliert, um Leistung wenigstens in Statorwindungen des Generators zu verbrauchen, um dadurch den Generator zu erwärmen.

Die Windenergieanlage ist somit dazu vorbereitet, ein Verfahren gemäß einer der vorstehend beschriebenen Ausführungsformen durchzuführen. Dazu weist sie zudem die in dem Verfahren beschriebenen Elemente auf, nämlich insbesondere auch eine Chopperschaltung, einen aktiven Gleichrichter und einen Wechselrichter, jeweils als Elemente des Umrichtersystems.

Zum Ausführen des Verfahrens kann dieses in der Windenergieanlage, insbesondere in der Anlagensteuerung implementiert sein. Dazu kann die Anlagensteuerung einen entsprechenden Prozessrechner aufweisen, in dem das jeweilige Verfahren als Programm implementiert ist.

Nachfolgend wird die Erfindung anhand von Ausführungsformen unter Bezugnahme auf die begleitenden Figuren beispielhaft näher erläutert.
- Figur 1: zeigt eine Windenergieanlage in einer perspektivischen Darstellung.
- Figur 2: zeigt ein Umrichtersystem mit einem Generator in einer schematischen Darstellung.
- Figur 3: zeigt ein Ablaufdiagramm für das Verfahren zum Beheizen des Generators.

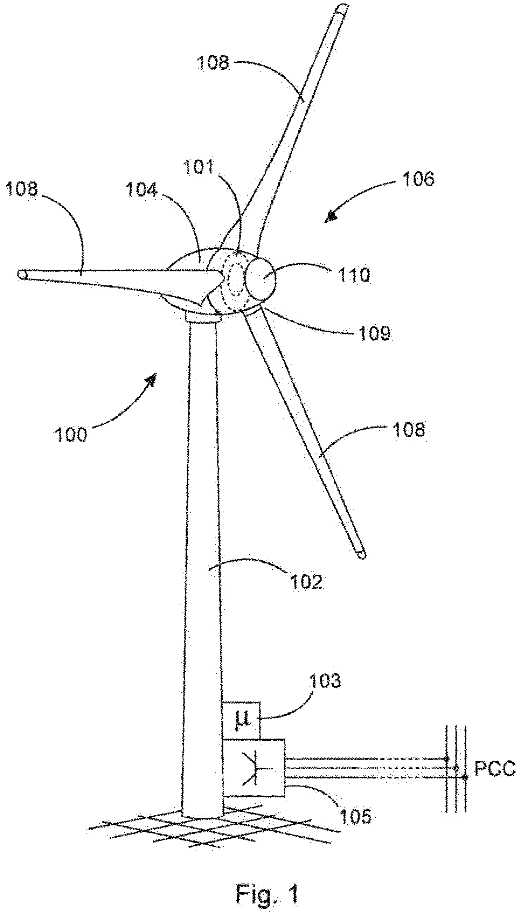

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist ein Umrichtersystem 105 vorgesehen, das einen Wechselrichter aufweist, um in das elektrische Versorgungsnetz an dem Netzanschlusspunkt PCC einzuspeisen, und das einen aktiven Gleichrichter aufweist, der mit dem Generator 101 verbunden ist. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch des Umrichtersystems 105 ist eine Anlagensteuerung 103 vorgesehen. Die Anlagensteuerung 103 kann auch Vorgabewerte von extern, insbesondere von einem zentralen Parkrechner erhalten.

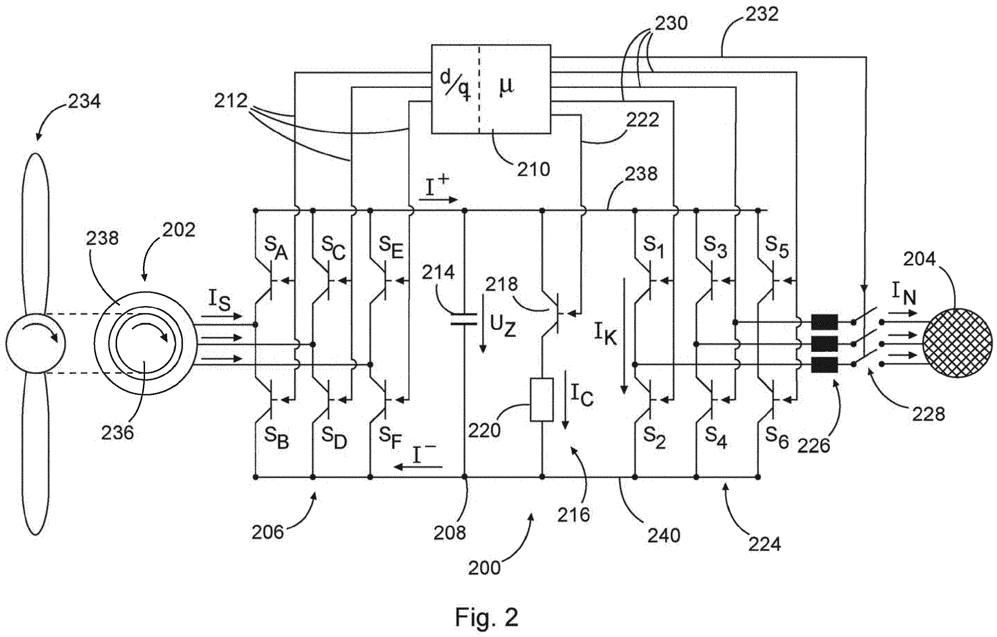

Figur 2 zeigt ein Umrichtersystem 200, das zwischen einem Synchrongenerator 202 und einem elektrischen Versorgungsnetz 204 angeordnet ist. Das Umrichtersystem 200 weist einen aktiven Gleichrichter 206 auf, der mit dem Synchrongenerator 202 verbunden ist, um einen dreiphasigen Statorstrom I_{S} zu steuern. Der Einfachheit halber ist der Statorstrom I_{S} nur an einer Phase eingezeichnet, aber er umfasst alle drei Phasen. Es ist jeweils ein Strompfeil eingezeichnet, der aus dem Synchrongenerator 202 in Richtung zum aktiven Gleichrichter 206 weist. Diese Richtung ist aber nur symbolisch zu verstehen, denn der Statorstrom ist natürlich ein Wechselstrom. Die Pfeilrichtung deutet die Leistungsflussrichtung an, denn der Synchrongenerator 202 soll als Generator arbeiten und Leistung abgeben. Auch im beschriebenen Verfahren zum Beheizen des Generators gibt dieser Leistung ab.

Der aktive Gleichrichter 206 kann diesen dreiphasigen Statorstrom I_{S} in einen Gleichstrom wandeln und in den Gleichspannungszwischenkreis 208 eingeben. Der resultierende Gleichstrom ist hier als I⁺ und I⁻ veranschaulicht. Der aktive Gleichrichter 206 ist dabei nur schematisch durch sechs Halbleiterschalter S_{A} bis S_{F} veranschaulicht. Zu einem vollständigen Aufbau eines solchen aktiven Gleichrichters gehören natürlich auch noch entsprechende Dioden parallel zu den Halbleiterschaltern, die hier der besseren Übersichtlichkeit halber weggelassen wurden. Dem Fachmann ist die Funktionsweise eine solchen aktiven Gleichrichters, der auch als generatorseitiger Wechselrichter bezeichnet werden kann, bekannt. Auch die Symbole der Halbleiterschalter sind stark vereinfacht.

Zur Ansteuerung ist eine Ansteuereinheit 210 vorgesehen, die Teil einer Anlagensteuerung sein kann. Die Ansteuereinheit 210 kann jeden der Halbleiterschalter S_{A} bis S_{F} ansteuern. Dadurch kann der Statorstrom I_{S} gesteuert werden und damit der Generator 202 elektrisch gesteuert werden. Zum Ansteuern des Generators 202 ist dafür vorgesehen, eine d/q-Steuerung zu verwenden. Das ist in der Ansteuereinheit 210 durch das Symbol d/q angedeutet. Entsprechend verlaufen von der Ansteuereinheit 210 entsprechende Steuerleitungen 212 zu den Halbleiterschaltern S_{A} bis S_{F}.

Der Gleichspannungszwischenkreis 208 weist einen Zwischenkreiskondensator 214 auf und der Gleichspannungszwischenkreis 208 und somit der Zwischenkreiskondensator 214 weisen eine Zwischenkreisspannung U_{Z} auf. In dem Gleichspannungszwischenkreis 208 ist zudem, parallel zum Zwischenkreiskondensator 214, eine Chopperschaltung 216 vorgesehen. dies Chopperschaltung 216 weist einen Chopper-Schalter 218 und einen Chopper-Widerstand 220 auf. Der Chopper-Schalter 218 ist ebenfalls als Halbleiterschalter ausgebildet und kann über die Chopper-Steuerleitung 222 von der Ansteuereinheit 210 angesteuert werden.

Die Chopperschaltung 216 dient dazu, Leistung aus dem Gleichspannungszwischenkreis 208 abzuführen, falls das notwendig ist. Im normalen Betrieb ist das notwendig, wenn die Zwischenkreisspannung U_{Z} zu groß wird, nämlich größer als ihre Nennspannung wird. Dann kann der Chopper-Schalter 218 so angesteuert werden, dass er gepulst schaltet, um dadurch einen Strom durch die Chopper-Widerstand 220 zu steuern. Der Chopper-Widerstand 220 ist üblicherweise vergleichsweise klein, sodass je nach Ansteuerung des Chopper-Schalters 218 ein hoher Strom fließen kann. Dieser wird dann in dem Chopper-Widerstand 220 in Wärme umgewandelt.

Weiterhin ist ein Wechselrichter 224 vorgesehen, der grundsätzlich wie der aktive Gleichrichter 206 aufgebaut sein kann. Insbesondere weist er sechs Halbleiterschalter S₁ bis S₆ auf. Jeweils zwei Halbleiterschalter bilden ein Halbleiterschalterpaar, nämlich S₁ und S₂, S₃ und S₄ sowie S₅ und S₆. Auch bei dem Wechselrichter 224 ist nur eine vereinfachte Struktur gezeigt, mit stark vereinfachten Symbolen für die Halbleiterschalter S₁ bis S₆ und auch unter Auslassung entsprechend parallelgeschalteter Dioden.

Im normalen Betrieb der Windenergieanlage bzw. des Umrichtersystems 200 erzeugt der Wechselrichter 224 mittels der Halbleiterschalter S₁ bis S₆ einen dreiphasigen Wechselstrom I_{N}. Dieser wird somit als dreiphasiger sinusförmiger Wechselstrom I_{N} erzeugt, wozu auch die angedeutete dreiphasige Drossel 226 benötigt wird. Dieser dreiphasige Wechselstrom I_{N} fließt dann über einen Netztrennschalter 228 in das symbolisch angedeutete elektrische Versorgungsnetz 204. In diesem Normalfall ist der Netztrennschalter 228 natürlich geschlossen. Der Wechselstrom I_{N} ist durch drei Strompfeile in Richtung zum elektrischen Versorgungsnetz 204 angedeutet, aber es ist natürlich ein Wechselstrom und es könnte auch Leistung von dem elektrischen Versorgungsnetz 204 zum Wechselrichter 224 fließen.

Zum Ansteuern der sechs Halbleiterschalter S₁ bis S₆ sind Wechselrichtersteuerleitungen 230 vorgesehen, über die die Ansteuereinheit 210 den Wechselrichter 224 ansteuern kann. Die Ansteuereinheit 210 kann auch den Netztrennschalter 228 ansteuern, nämlich über die Trennschaltersteuerleitung 232.

In einem vorgeschlagenen Verfahren zum Beheizen des Generators 202 wird somit der symbolisch angedeutete Rotor 234 mit langsamer Drehzahl durch den Wind gedreht und damit dreht sich ein Läufer 236 des Synchrongenerators 202 mit derselben Drehzahl in dieselbe Richtung. Der Synchrongenerator 202 ist hier symbolisch als Innenläufer ausgebildet und weist somit außen seinen Stator 238 auf.

Jedenfalls wird für das Verfahren vorgeschlagen, dass zu Beginn des Verfahrens zum Beheizen des Generators 202 die Zwischenkreisspannung U_{Z} einen mittleren Spannungsbereich aufweist, z.B. 400V, wenn sie im Normalbetrieb zwischen 1000 und 1200V liegt. Für dieses gesamte Verfahren ist der Netztrennschalter 228 geöffnet, wie dies auch in Figur 2 dargestellt ist. Zu Beginn ist der Wechselrichter 224 inaktiv. Es stellt sich dann sehr schnell eine Spannung im Gleichspannungszwischenkreis 208 und damit an dem Zwischenkreiskondensator 214 ein, der hierbei nämlich durch den Generator geladen wird.

Die Zwischenkreisspannung wird dann aber durch Ansteuern der Chopperschaltung bzw. ihres Chopper-Schalters 218 abgebaut. Die Zwischenkreisspannung U_{Z} sinkt dann ab von dem anfangs mittleren Spannungsbereich in einen niedrigen Spannungsbereich bis nahe an null. Dann wird der Generator 206 unter Verwendung einer d/q-Steuerung mit Feldschwächung betrieben. Das Magnetfeld des Synchrongenerators, zumindest in dem Modell, über das der Synchrongenerator gesteuert wird, wird dann sehr stark verringert. Der Synchrongenerator 202 erzeugt dann wenig Strom, der in dem Moment noch als dreiphasiger Statorstrom I_{S} erzeugt wird und in den Gleichstrom I⁺ bzw. I⁻ gewandelt wird. In diesem Moment fließt dann ein durch ein Pulsmodulationsverfahren erzeugter Chopper-Strom I_{C} durch den Chopper-Widerstand 220 und durch den Chopper-Schalter 218. Dieser Chopper-Strom I_{C} ist somit ein gepulster Strom dessen Mittelwert größer als der Gleichstrom I⁺ bzw. I⁻ ist, denn dieser Gleichstrom wird über diese Chopperschaltung abgebaut und zusätzlich wird Energie aus dem Zwischenkreiskondensator 214 abgebaut.

Wenn dann die Zwischenkreisspanung U_{Z} null bzw. fast null ist, wird der Wechselrichter 224 so angesteuert, dass er einen Kurzschluss zwischen der positiven Sammelschiene 238 und der negativen Sammelschiene 240 durchführt. Dazu kann er beispielsweise die beiden Halbleiterschalter S₁ und S₂ des entsprechenden Halbleiterschalterpaares, das sie bilden, gleichzeitig schließen und geschlossen lassen. Dann fließt ein Kurzschlussstrom I_{K}. Das Ansteuern der Chopperschaltung 216 kann dann beendet werden, sodass der Chopper-Schalter 218 geöffnet bleibt.

In dieser Situation kann dann das Beheizen des Generators 202 durchgeführt werden, wobei auch der aktive Gleichrichter 206 und der Wechselrichter 224 etwas Wärme aufnehmen werden. Es stellt sich dann idealerweise bzw. vereinfachend ein stationärer Zustand ein, in dem der Statorstrom I_{S} gleichgerichtet wird und zu dem positiven Gleichstrom I⁺ führt, der in die positive Sammelschiene 238 fließt. Von dort fließt er weiter in dem gezeigten Beispiel als I_{K} durch die beiden Halbleiterschalter S₁ und S₂ des Wechselrichters 224. Der Kurzschlussstrom I_{K} entspricht dann in seiner Größe dem positiven Gleichstrom I⁺. Der Strom fließt dann entsprechend zur negativen Sammelschiene 240 und bildet dann den negativen Gleichstrom I⁻. Der ist dabei aber auch ein Ergebnis der Steuerung des Statorstroms I_{S} durch den aktiven Gleichrichter 206. Insoweit bildet sich ein Stromkreislauf für den Statorstrom I_{S}, wobei der Statorstrom dabei teilweise als Gleichstrom auftritt.

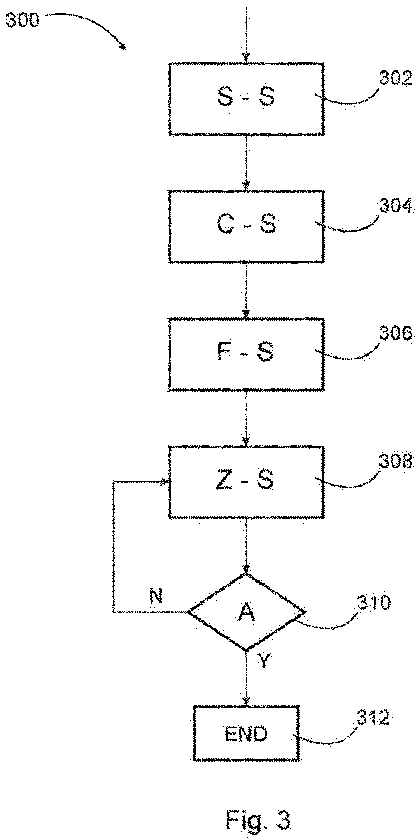

Figur 3 verdeutlicht den Ablauf des vorgeschlagenen Verfahrens zum Beheizen des Generators. In dem Ablaufdiagramm 300 der Figur 3 ist zunächst der Startschritt 302 vorgesehen. In dem Startschritt 302 wird die Windenergieanlage bzw. ihr aerodynamischer Rotor mit niedriger Drehzahl gedreht. Das Umrichtersystem weist dabei eine mittlere Zwischenkreisspannung auf, wie dies im Zusammenhang mit der Figur 2 beschrieben wurde. Das Ablaufdiagramm und damit der Startschritt 302 können beispielsweise dann ausgewählt werden, wenn die Windenergieanlage längere Zeit nicht betrieben wurde und/oder wenn sie unter eine Grenztemperatur abgefallen ist und/oder wenn eine entsprechende Luftfeuchtigkeit oder sogar ein Kondensat detektiert wurde. An den Startschritt 302 schließt sich der Chopper-Schritt 304 an. In dem Chopper-Schritt 304 wird die Zwischenkreisspannung U_{Z} dann langsam verringert und möglichst gegen null bzw. nahe null gebracht. Das erfolgt, wie in Figur 2 erläutert, mittels einer Chopperschaltung wie der Chopperschaltung 216.

Es schließt sich dann der Feldschwächungsschritt 306 an, der aber auch mit dem Chopper-Schritt 304 überlappen kann. In dem Feldschwächungsschritt 306 wird der Generator mit einer Feldschwächung betrieben, sodass er vergleichsweise wenig Leistung und damit vergleichsweise wenig Strom erzeugt. Dadurch kann es dann auch gelingen, die Zwischenkreisspannung auf null oder nahe null zu bringen. Dann kann der Null-Modus einsetzen.

Der Null-Modus ist im Null-Modus-Schritt 308 veranschaulicht. Bei ihm wird der Gleichspannungszwischenkreis kurzgeschlossen, nämlich mittels des Wechselrichters. Auch das wurde zur Figur 2 beschrieben. Die Ansteuerung der Chopperschaltung kann dann beendet werden und das Verfahren zum Beheizen kann im Grunde in dem Zustand, der in dem Null-Modus-Schritt 308 hergestellt wurde, längere Zeit betrieben werden.

Um diesen längeren Betrieb zu veranschaulichen, schließt sich an den Null-Modus-Schritt 308 eine Abfrage 310 an. In dieser Abfrage 310 wird geprüft, ob der Heizvorgang ausreichend war. Dazu kann aus Erfahrung eine Zeit gesetzt werden, oder es kann eine Temperatur überwacht werden, oder es kann unmittelbar eine Feuchtigkeit überwacht werden, um einige Beispiele zu nennen. Diese Kriterien können auch kombiniert werden.

Ist also eine Abbruchbedingung noch nicht erreicht, dann führt die Abfrage 310 zurück zum Null-Modus-Schritt 308. Das soll aber nur bedeuten, dass der Betrieb weitergeführt wird. Das Kurzschließen des Gleichspannungszwischenkreises durch den Wechselrichter wird also nicht erneut initialisiert, sondern beibehalten.

Ist aber bei der Abfrage 310 erkannt, dass das Beheizen beendet werden kann, ist die Abfrage also positiv, ist das Verfahren beendet, was der Endschritt 312 symbolisiert.

## Patentansprüche

1. Verfahren zum Beheizen eines Generators (202) einer Windenergieanlage (100) bei oder vor dem Starten der Windenergieanlage (100), wobei
- der Generator (202) ein Permanentmagnet-Synchrongenerator (PMG) ist, der dazu ausgebildet ist, einen Statorstrom (I_{S}) zu erzeugen, wobei der Statorstrom (I_{S}) wenigstens einen dreiphasigen Strom aufweist, und
- die Windenergieanlage (100) als getriebelose Windenergieanlage ausgebildet ist und an ein elektrisches Versorgungsnetz (204) angeschlossen ist, zum Einspeisen elektrischer Leistung in das elektrische Versorgungsnetz (204), und die Windenergieanlage (100) umfasst:
- einen Rotor (106) mit Rotorblättern (108), der mit variabler Drehzahl betreibbar ist,
- ein Umrichtersystem (200),
- das mit dem Generator (202) verbunden ist, um den Generator (202) zu steuern, und
- das mit dem elektrischen Versorgungsnetz (204) verbunden ist, um elektrische Leistung, die von dem Generator (202) erzeugt wurde, in das elektrische Versorgungsnetz (204) einzuspeisen
das Verfahren umfasst
- Drehen des Rotors (106) mit einer niedrigen Drehzahl unterhalb einer ersten Drehzahlgrenze
- Betreiben des Umrichtersystems (200) so, dass
- der Generator (202) den Statorstrom (I^{S}) und elektrische Leistung erzeugt, und
- keine elektrische Leistung in das elektrische Versorgungsnetz (204) eingespeist wird, wobei
- der Statorstrom (I_{S}), zumindest ein Teil davon, im Wesentlichen durch den Generator (202) und das Umrichtersystem (200) zirkuliert, um Leistung wenigstens in Statorwindungen des Generators zu verbrauchen, um dadurch den Generator (202) zu erwärmen,
**dadurch gekennzeichnet, dass**
- zum Beheizen der Generator (202) durch das Umrichtersystem (200) unter Verwendung einer Feldschwächungssteuerung gesteuert wird, um ein Generatormoment unterhalb eines vorbestimmten ersten Drehmomentgrenzwertes zu steuern, der unterhalb eines Nennmomentes des Generators (202) liegt, wobei das Nennmoment wenigstens um den Faktor 2 insbesondere wenigstens um den Faktor 10 größer als der vorbestimmte erste Drehmomentgrenzwert ist.

2. Verfahren nach Anspruch 1, **dadurch gekennzeichnet, dass**
- das Umrichtersystem (200) Folgendes umfasst:
- einen aktiven Gleichrichter (206), der zwischen dem Generator (202) und einem Gleichspannungszwischenkreis (208) verbunden ist, zum Steuern des Generators (202) und zum Gleichrichten des Statorstromes (I_{S}) in einen Gleichstrom (I⁺, I) zum Einspeisen in den Gleichspannungszwischenkreis (208), der eine Zwischenkreisspannung (U_{Z}) aufweist, und
- einen Wechselrichter (224), der mit dem Gleichspannungszwischenkreis (208) verbunden ist, um Energie aus dem Gleichspannungszwischenkreis (208) in einen Wechselstrom (I_{N}) zum Einspeisen in das elektrische Versorgungsnetz (204) wechselzurichten, wobei
- der Wechselrichter (224) so betrieben wird, dass der Gleichspannungszwischenkreis (208) zumindest zeitweise kurzgeschlossen ist, und/oder
- der aktive Gleichrichter (206) so betrieben wird, dass Phasen des Statorstromes (I_{S}) zumindest zeitweise kurzgeschlossen sind.

3. Verfahren nach Anspruch 1 oder 2, **dadurch gekennzeichnet, dass**
- der Generator (202) durch Implementieren einer d/q-Steuerung gesteuert wird, die eine d-Komponente und eine q-Komponente in einem rotierenden Bezugssystem vorgibt, wobei die d-Komponente zum Steuern eines Magnetfeldes des Generators verwendet wird, und wobei die d-Komponente so ausgewählt wird, dass sie das Magnetfeld reduziert, insbesondere so, dass die d-Komponente auf einen negativen Wert eingestellt wird.

4. Verfahren nach einem der vorstehenden Ansprüche, **dadurch gekennzeichnet, dass**
- in einem Startschritt,
- während der Rotor (106) mit der niedrigen Drehzahl betrieben wird,
- eine Generatorspannung auf einen niedrigen Wert unterhalb eines ersten Generatorspannungsgrenzwertes gesteuert wird, und/oder
- einer bzw. der Gleichspannungszwischenkreis (208) so betrieben wird, dass er einen mittleren Zwischenkreisspannungswert aufweist, der unterhalbeines ersten und oberhalb eines zweiten vorbestimmbaren Zwischenkreisspannungsgrenzwertes liegt.

5. Verfahren nach einem der vorstehenden Ansprüche, **dadurch gekennzeichnet, dass**
- in einem Chopper-Schritt,
- während der Rotor (106) weiterhin mit der niedrigen Drehzahl dreht,
- eine Chopperschaltung (216) eines bzw. des Gleichspannungszwischenkreises (208) dazu betrieben wird, die Zwischenkreisspannung (U_{Z}) abzusenken, auf einen niedrigen Zwischenkreisspannungswert unterhalb eines bzw. des zweiten vorgebbaren Zwischenkreisspannungsgrenzwertes, insbesondere unterhalb eines dritten vorgebbaren Zwischenkreisspannungsgrenzwertes, wobei insbesondere
- die Chopperschaltung (216) einen Chopper-Strom (I_{C}) aus dem Gleichspannungszwischenkreis (208) zu einem Chopper-Widerstand (220) steuert, wobei die Chopperschaltung (216) eine Pulsmodulation verwendet, bei der sich in einer Periodendauer eine Pulsdauer mit einer pulsfreien Zeit abwechselt, um den Chopper-Strom durch Einstellen eines Pulsverhältnisses zu steuern, wobei das Pulsverhältnis ein Verhältnis der Pulsdauer zur Periodendauer angibt, und wobei in dem Chopper-Schritt das Pulsverhältnis erhöht wird, um dadurch die Zwischenkreisspannung (U_{Z}) zu senken, insbesondere wird das Pulsverhältnis sukzessive von 0% auf etwa 100% erhöht.

6. Verfahren nach einem der vorstehenden Ansprüche, **dadurch gekennzeichnet, dass**
- in einem Feldschwächungsschritt
- während der Rotor (106) weiterhin mit der niedrigen Drehzahl dreht,
- eine bzw. die Zwischenkreisspannung auf einen Nullwert gesteuert wird, der nahe null ist, insbesondere unter Verwendung einer bzw. der Chopperschaltung (216), und
- der Generator (202) durch das Umrichtersystem (200) unter Verwendung einer bzw. der Feldschwächungssteuerung gesteuert wird, um den Generator (202) wenig Leistung erzeugen zu lassen, um die Steuerung der Zwischenkreisspannung (U_{Z}) auf null zu unterstützen.

7. Verfahren nach einem der vorstehenden Ansprüche, **dadurch gekennzeichnet, dass**
- in einem Null-Modus-Schritt
- während der Rotor (106) weiterhin mit der niedrigen Drehzahl dreht, und
- während eine bzw. die Zwischenkreisspannung auf einen bzw. den Nullwert nahe null gesteuert wird,
- ein bzw. der Wechselrichter (224), der mit einem bzw. dem Gleichspannungszwischenkreis (208) verbunden ist, in einen Null-Modus geschaltet wird, wobei
- der Null-Modus dadurch definiert ist, dass von wenigstens einem Halbleiterschalterpaar (S₁, S₂) beide Halbleiterschalter geschlossen werden, um dadurch den Gleichspannungszwischenkreis (208) kurzzuschließen, und
- die Windenergieanlage (100) in dem Null-Modus betrieben wird, um wenigstens den Generator (202) zu beheizen.

8. Verfahren nach einem der Ansprüche 4 bis 7, **dadurch gekennzeichnet, dass**
- der Startschritt, der Chopper-Schritt, der Feldschwächungsschritt und der Null-Modus-Schritt in dieser Reihenfolge nacheinander ausgeführt werden.

9. Verfahren nach einem der vorstehenden Ansprüche, **dadurch gekennzeichnet, dass**
das Verfahren wenigstens eines der Merkmale der Liste verwendet, die folgende Merkmale aufweist:
- dass die erste Drehzahlgrenze im Bereich von 20 bis 50% einer Nenndrehzahl des Rotors liegt, und/oder die erste Drehzahlgrenze im Bereich von 2,5 bis 4,5 U/min, insbesondere 3 bis 4 U/min, liegt
- dass ein oder der erste Generatorspannungsgrenzwert in einem Bereich von 30% bis 70% einer Generatornennspannung liegt, insbesondere in einem Bereich von 200V bis 500V, insbesondere in einem Bereich von 300V bis 400V,
- dass ein bzw. der erste vorbestimmbare Zwischenkreisspannungsgrenzwert in einem Bereich von 40% bis 60% einer Nennzwischenkreisspannung liegt, und/oder in einem Bereich von 400V bis 700V,
- dass ein bzw. der zweite vorbestimmbare Zwischenkreisspannungsgrenzwert in einem Bereich von 30% bis 40% der Nennzwischenkreisspannung liegt, und/oder in einem Bereich von 300V bis 400V,
- dass ein bzw. der dritte vorbestimmbare Zwischenkreisspannungsgrenzwert in einem Bereich von 5% bis 20% der Nennzwischenkreisspannung liegt, und/oder in einem Bereich von 50V bis 200V und
- dass ein bzw. der Nullwert kleiner als der dritte vorbestimmbare Zwischenkreisspannungsgrenzwert ist, insbesondere kleiner als 2%, insbesondere kleiner als 1% der Nennzwischenkreisspannung, und/oder kleiner als 20V, insbesondere kleiner als 10V ist.

10. Verfahren nach einem der vorstehenden Ansprüche, **dadurch gekennzeichnet, dass**
- zum Beheizen des Generators (202) die Windenergieanlage (100), insbesondere das Umrichtersystem (200), von dem elektrischen Versorgungsnetz (204) getrennt ist.

11. Windenergieanlage (100) vorbereitet zum
Beheizen eines Generators (202) einer Windenergieanlage (100) bei oder vor dem Starten der Windenergieanlage (100),
wobei dazu eine Anlagensteuerung (103) vorgesehen ist, auf der ein Verfahren zum Beheizen implementiert ist, wobei
- der Generator (202) ein Permanentmagnet-Synchrongenerator (PMG) ist, der dazu ausgebildet ist, einen Statorstrom (I_{S}) zu erzeugen, wobei der Statorstrom (I_{S}) wenigstens einen dreiphasigen Strom aufweist, und
- die Windenergieanlage (100) als getriebelose Windenergieanlage ausgebildet ist und an ein elektrisches Versorgungsnetz (204) angeschlossen ist, zum Einspeisen elektrischer Leistung in das elektrische Versorgungsnetz (204), und die Windenergieanlage umfasst:
- einen Rotor (106) mit Rotorblättern (108), der mit variabler Drehzahl betreibbar ist,
- ein Umrichtersystem (200),
- das mit dem Generator (202) verbunden ist, um den Generator (202) zu steuern, und
- das mit dem elektrischen Versorgungsnetz (204) verbunden ist, um elektrische Leistung, die von dem Generator (202) erzeugt wurde, in das elektrische Versorgungsnetz (204) einzuspeisen, und
das Verfahren umfasst
- Drehen des Rotors (106) mit einer niedrigen Drehzahl unterhalb einer ersten Drehzahlgrenze
- Betreiben des Umrichtersystems (200) so, dass
- der Generator (202) den Statorstrom (I_{S}) und elektrische Leistung erzeugt, und
- keine elektrische Leistung in das elektrische Versorgungsnetz (204) eingespeist wird, wobei
- der Statorstrom (I_{S}), zumindest ein Teil davon, im Wesentlichen durch den Generator (202) und das Umrichtersystem (200) zirkuliert, um Leistung wenigstens in Statorwindungen des Generators (202) zu verbrauchen, um dadurch den Generator (202) zu erwärmen,
**dadurch gekennzeichnet, dass**
- zum Beheizen der Generator (202) durch das Umrichtersystem (200) unter Verwendung einer Feldschwächungssteuerung gesteuert wird, um ein Generatormoment unterhalb eines vorbestimmten ersten Drehmomentgrenzwertes zu steuern, der unterhalb eines Nennmomentes des Generators (202) liegt, wobei das Nennmoment wenigstens um den Faktor 2 insbesondere wenigstens um den Faktor 10 größer als der vorbestimmte erste Drehmomentgrenzwert ist.

12. Windenergieanlage (100) nach Anspruch 11, **dadurch gekennzeichnet, dass** die Windenergieanlage (100), insbesondere die Anlagensteuerung (103), dazu eingerichtet ist, ein Verfahren gemäß einem der Ansprüche 1 bis 10 auszuführen.

## Claims

1. A method for heating a generator (202) of a wind power installation (100) during or before the starting of the wind power installation (100), wherein
- the generator (202) is a permanent magnet synchronous generator (PMG) configured to generate a stator current (I_{S}), wherein the stator current (I_{S}) comprises at least one three-phase current, and
- the wind power installation (100) is configured as a gearless wind power installation and is connected to an electrical supply network (204), for the purpose of feeding electrical power into the electrical supply network (204), and the wind power installation (100) comprises:
- a rotor (106) having rotor blades (108), which is operable with variable rotational speed,
- a converter system (200),
- which is connected to the generator (202) in order to control the generator (202) and
- which is connected to the electrical supply network (204) in order to feed electrical power that was generated by the generator (202) into the electrical supply network (204),
the method comprises
- rotating the rotor (106) with a low rotational speed below a first rotational speed limit
- operating the converter system (200) such that
- the generator (202) generates the stator current (I_{S}) and electrical power, and
- no electrical power is fed into the electrical supply network (204), wherein
- the stator current (I_{S}), at least one portion thereof, substantially circulates through the generator (202) and the converter system (200) in order to consume power at least in stator windings of the generator, in order thereby to heat the generator (202),
**characterized in that**
- for heating purposes the generator (202) is controlled by the converter system (200) using a field weakening control in order to control a generator torque below a predetermined first torque limit value, which lies below a rated torque of the generator (202), wherein the rated torque is greater than the predetermined first torque limit value at least by the factor of 2, in particular at least by the factor of 10.

2. The method as claimed in claim 1, **characterized in that**
- the converter system (200) comprises the following:
- an active rectifier (206), which is connected between the generator (202) and a DC voltage link circuit (208), for controlling the generator (202) and for rectifying the stator current (I_{S}) into a DC current (I⁺, I⁻) for feeding into the DC voltage link circuit (208), which has a link circuit voltage (Uz), and
- an inverter (224), which is connected to the DC voltage link circuit (208), in order to invert energy from the DC voltage link circuit (208) into an AC current (I_{N}) for feeding into the electrical supply network (204), wherein
- the inverter (224) is operated such that the DC voltage link circuit (208) is short-circuited at least at times, and/or
- the active rectifier (206) is operated such that phases of the stator current (I_{S}) are short-circuited at least at times.

3. The method as claimed in claim 1 or 2, **characterized in that**
- the generator (202) is controlled by implementing a d/q control that predefines a d component and a q component in a rotating reference system, wherein the d component is used for controlling a magnetic field of the generator, and wherein the d component is selected such that it reduces the magnetic field, in particular such that the d component is set to a negative value.

4. The method as claimed in any of the preceding claims, **characterized in that**
- in a start step,
- while the rotor (106) is operated with the low rotational speed,
- a generator voltage is controlled to a low value below a first generator voltage limit value, and/or
- a or the DC voltage link circuit (208) is operated such that it has a medium link circuit voltage value that lies below a first and above a second predeterminable link circuit voltage limit value.

5. The method as claimed in any of the preceding claims, **characterized in that**
- in a chopper step,
- while the rotor (106) continues to rotate with the low rotational speed,
- a chopper circuit (216) of a or the DC voltage link circuit (208) is operated to the effect of lowering the link circuit voltage (Uz), to a low link circuit voltage value below a or the second predeterminable link circuit voltage limit value, in particular below a third predeterminable link circuit voltage limit value, wherein in particular
- the chopper circuit (216) controls a chopper current (Ic) from the DC voltage link circuit (208) to a chopper resistor (220), wherein the chopper circuit (216) uses a pulse modulation in which a pulse duration alternates with a pulse-free time in a period duration in order to control the chopper current by setting a pulse ratio, wherein the pulse ratio specifies a ratio of the pulse duration to the period duration, and wherein the pulse ratio is increased in the chopper step in order thereby to decrease the link circuit voltage (Uz); in particular, the pulse ratio is increased progressively from 0% to approximately 100%.

6. The method as claimed in any of the preceding claims, **characterized in that**
- in a field weakening step,
- while the rotor (106) continues to rotate with the low rotational speed,
- a or the link circuit voltage is controlled to a zero value that is close to zero, in particular using a or the chopper circuit (216), and
- the generator (202) is controlled by the converter system (200) using a or the field weakening control in order to cause the generator (202) to generate little power, in order to support the control of the link circuit voltage (Uz) to zero.

7. The method as claimed in any of the preceding claims, **characterized in that**
- in a zero mode step,
- while the rotor (106) continues to rotate with the low rotational speed, and
- while a or the link circuit voltage is controlled to a or the zero value close to zero,
- a or the inverter (224) connected to a or the DC voltage link circuit (208) is switched into a zero mode, wherein
- the zero mode is defined by the fact that both semiconductor switches of at least one semiconductor switch pair (S₁, S₂) are closed in order thereby to short-circuit the DC voltage link circuit (208), and
- the wind power installation (100) is operated in the zero mode in order to heat at least the generator (202).

8. The method as claimed in any of claims 4 to 7, **characterized in that**
- the start step, the chopper step, the field weakening step and the zero mode step are carried out successively in this order.

9. The method as claimed in any of the preceding claims, **characterized in that**
the method uses at least one of the features of the list comprising the following features:
- that the first rotational speed limit lies in the range of 20 to 50% of a rated rotational speed of the rotor, and/or the first rotational speed limit lies in the range of 2.5 to 4.5 rpm, in particular 3 to 4 rpm,
- that a or the first generator voltage limit value lies in a range of 30% to 70% of a rated generator voltage, in particular in a range of 200 V to 500 V, in particular in a range of 300 V to 400 V,
- that a or the first predeterminable link circuit voltage limit value lies in a range of 40% to 60% of a rated link circuit voltage, and/or in a range of 400 V to 700 V,
- that a or the second predeterminable link circuit voltage limit value lies in a range of 30% to 40% of the rated link circuit voltage, and/or in a range of 300 V to 400 V,
- that a or the third predeterminable link circuit voltage limit value lies in a range of 5% to 20% of the rated link circuit voltage, and/or in a range of 50 V to 200 V, and
- that a or the zero value is less than the third predeterminable link circuit voltage limit value, in particular is less than 2%, in particular less than 1% of the rated link circuit voltage, and/or is less than 20 V, in particular less than 10 V.

10. The method as claimed in any of the preceding claims, **characterized in that**
- for the purpose of heating the generator (202), the wind power installation (100), in particular the converter system (200), is disconnected from the electrical supply network (204).

11. A wind power installation (100) prepared for
heating a generator (202) of a wind power installation (100) during or before the starting of the wind power installation (100),
wherein for this purpose an installation controller (103) is provided, on which a method for heating is implemented, wherein
- the generator (202) is a permanent magnet synchronous generator (PMG) configured to generate a stator current (I_{S}), wherein the stator current (I_{S}) comprises at least one three-phase current, and
- the wind power installation (100) is configured as a gearless wind power installation and is connected to an electrical supply network (204), for the purpose of feeding electrical power into the electrical supply network (204), and the wind power installation comprises:
- a rotor (106) having rotor blades (108), which is operable with variable rotational speed,
- a converter system (200),
- which is connected to the generator (202) in order to control the generator (202) and
- which is connected to the electrical supply network (204) in order to feed electrical power that was generated by the generator (202) into the electrical supply network (204), and
the method comprises
- rotating the rotor (106) with a low rotational speed below a first rotational speed limit
- operating the converter system (200) such that
- the generator (202) generates the stator current (I_{S}) and electrical power, and
- no electrical power is fed into the electrical supply network (204), wherein
- the stator current (I_{S}), at least one portion thereof, substantially circulates through the generator (202) and the converter system (200) in order to consume power at least in stator windings of the generator (202), in order thereby to heat the generator (202),
**characterized in that**
- for heating purposes the generator (202) is controlled by the converter system (200) using a field weakening control in order to control a generator torque below a predetermined first torque limit value, which lies below a rated torque of the generator (202), wherein the rated torque is greater than the predetermined first torque limit value at least by the factor of 2, in particular at least by the factor of 10.

12. The wind power installation (100) as claimed in claim 11, wherein the wind power installation (100), in particular the installation controller (103), is designed to carry out a method as claimed in any of claims 1 to 10.

## Revendications

1. Procédé destiné à chauffer un générateur (202) d'une éolienne (100) lors du démarrage ou avant le démarrage de l'éolienne (100), dans lequel
- le générateur (202) est un générateur synchrone à aimant permanent (PMG) qui est réalisé pour générer un courant statorique (I_{S}), dans lequel le courant statorique (I_{S}) présente au moins un courant triphasé, et
- l'éolienne (100) est réalisée comme une éolienne sans engrenage et est connectée à un réseau d'alimentation électrique (204), pour injecter de la puissance électrique dans le réseau d'alimentation électrique (204), et l'éolienne (100) comprend :
- un rotor (106) avec des pales de rotor (108), qui peut fonctionner à une vitesse de rotation variable,
- un système convertisseur (200),
- qui est relié au générateur (202) pour commander le générateur (202), et
- qui est relié au réseau d'alimentation électrique (204) pour injecter dans le réseau d'alimentation électrique (204) une puissance électrique qui a été générée par le générateur (202), le procédé comprenant
- la rotation du rotor (106) à faible vitesse de rotation en dessous d'une première limite de vitesse de rotation
- le fonctionnement du système convertisseur (200) de telle sorte que
- le générateur (202) génère le courant statorique (I^{S}) et la puissance électrique, et
- aucune puissance électrique n'est injectée dans le réseau d'alimentation électrique (204), dans lequel
- le courant statorique (I_{S}), au moins une partie de celui-ci, circule sensiblement à travers le générateur (202) et le système convertisseur (200) pour consommer de la puissance au moins dans des enroulements de stator du générateur pour réchauffer ainsi le générateur (202),
**caractérisé en ce que**
- pour le chauffage, le générateur (202) est commandé par le système convertisseur (200) en utilisant une commande d'affaiblissement de champ pour commander un couple de générateur inférieur à une première valeur limite de couple de rotation prédéterminée, qui est inférieure à un couple nominal du générateur (202), dans lequel le couple nominal est en particulier supérieur à la première valeur limite de couple de rotation prédéterminée d'au moins le facteur 2, en particulier d'au moins le facteur 10.

2. Procédé selon la revendication 1, **caractérisé en ce que**
- le système convertisseur (200) comprend :
- un redresseur actif (206), qui est relié entre le générateur (202) et un circuit intermédiaire à tension continue (208), pour commander le générateur (202) et pour redresser le courant statorique (I_{S}) en un courant continu (I⁺, I⁻) à injecter dans le circuit intermédiaire à tension continue (208), qui présente une tension de circuit intermédiaire (U_{Z}), et
- un onduleur (224), qui est relié au circuit intermédiaire à tension continue (208) pour redresser de l'énergie du circuit intermédiaire à tension continue (208) en un courant alternatif (I_{N}) à injecter dans le réseau d'alimentation électrique (204), dans lequel
- l'onduleur (224) fonctionne de telle sorte que le circuit intermédiaire à tension continue (208) est court-circuité au moins temporairement, et/ou
- le redresseur actif (206) fonctionne de telle sorte que des phases du courant statorique (I_{S}) sont court-circuitées au moins temporairement.

3. Procédé selon la revendication 1 ou 2, **caractérisé en ce que**
- le générateur (202) est commandé par la mise en œuvre d'une commande d/q, qui prédéfinit une composante d et une composante q dans un système de référence rotatif, dans lequel la composante d est utilisée pour commander un champ magnétique du générateur, et dans lequel la composante d est choisie pour réduire le champ magnétique, en particulier pour régler la composante d à une valeur négative.

4. Procédé selon l'une quelconque des revendications précédentes, **caractérisé en ce que**
- dans une étape de démarrage,
- pendant que le rotor (106) fonctionne à faible vitesse de rotation,
- une tension de générateur est commandée à une valeur basse en dessous d'une première valeur limite de tension de générateur, et/ou
- un ou le circuit intermédiaire à tension continue (208) fonctionne de telle sorte qu'il présente une valeur moyenne de tension de circuit intermédiaire qui est inférieure à une première et supérieure à une deuxième valeur limite de tension de circuit intermédiaire pouvant être prédéterminée.

5. Procédé selon l'une quelconque des revendications précédentes, **caractérisé en ce que**
- dans une étape de hacheur,
- pendant que le rotor (106) continue à tourner à la faible vitesse,
- un circuit hacheur (216) d'un ou du circuit intermédiaire à tension continue (208) fonctionne pour abaisser la tension de circuit intermédiaire (U_{Z}) à une valeur de tension de circuit intermédiaire basse inférieure à une ou à la deuxième valeur limite de tension de circuit intermédiaire pouvant être prédéfinie, en particulier inférieure à une troisième valeur limite de tension de circuit intermédiaire pouvant être prédéfinie, dans lequel en particulier
- le circuit hacheur (216) commande un courant de hacheur (I_{C}) depuis le circuit intermédiaire à tension continue (208) vers une résistance de hacheur (220), dans lequel le circuit hacheur (216) utilise une modulation d'impulsions, dans laquelle, dans une durée de période, une durée d'impulsion alterne avec un temps sans impulsion, pour commander le courant de hacheur en réglant un rapport d'impulsion, dans lequel le rapport d'impulsion indique un rapport entre la durée d'impulsion et la durée de période, et dans lequel, dans l'étape de hacheur, le rapport d'impulsion est augmenté pour réduire ainsi la tension du circuit intermédiaire (U_{Z}), en particulier le rapport d'impulsion est progressivement augmenté de 0 % à environ 100 %.

6. Procédé selon l'une quelconque des revendications précédentes, **caractérisé en ce que**
- dans une étape d'affaiblissement de champ
- pendant que le rotor (106) continue à tourner à la faible vitesse,
- une ou la tension de circuit intermédiaire est commandée à une valeur proche de zéro, en particulier en utilisant un ou le circuit hacheur (216), et
- le générateur (202) est commandé par le système convertisseur (200) en utilisant une ou la commande d'affaiblissement de champ pour permettre au générateur (202) de produire peu de puissance, pour soutenir la commande de la tension de circuit intermédiaire (U_{Z}) à zéro.

7. Procédé selon l'une quelconque des revendications précédentes, **caractérisé en ce que**
- dans une étape de mode zéro
- pendant que le rotor (106) continue de tourner à la faible vitesse de rotation, et
- pendant qu'une ou la tension de circuit intermédiaire est commandée à une ou à la valeur nulle,
- un ou l'onduleur (224), qui est relié à un ou au circuit intermédiaire à tension continue (208), est commuté dans un mode zéro, dans lequel
- le mode zéro est défini **en ce que**, parmi au moins une paire de commutateurs à semi-conducteurs (S₁, S₂), les deux commutateurs à semi-conducteurs sont fermés, pour court-circuiter ainsi le circuit intermédiaire à tension continue (208), et
- l'éolienne (100) fonctionne dans le mode zéro pour chauffer au moins le générateur (202).

8. Procédé selon l'une quelconque des revendications 4 à 7, **caractérisé en ce que**
- l'étape de démarrage, l'étape de hacheur, l'étape d'affaiblissement de champ et l'étape de mode zéro sont exécutées successivement dans cet ordre.

9. Procédé selon l'une quelconque des revendications précédentes, **caractérisé en ce que**
le procédé utilise au moins une des caractéristiques de la liste qui présente des caractéristiques suivantes :
- que la première limite de vitesse de rotation se situe dans la plage de 20 à 50 % d'une vitesse de rotation nominale du rotor, et/ou que la première limite de vitesse de rotation se situe dans la plage de 2,5 à 4,5 tr/min, notamment 3 à 4 tr/min,
- qu'une ou la première valeur limite de tension de générateur se situe dans une plage de 30 % à 70 % d'une tension nominale de générateur, en particulier dans une plage de 200 V à 500 V, en particulier dans une plage de 300 V à 400 V,
- qu'une ou la première valeur limite de tension de circuit intermédiaire pouvant être prédéterminée se situe dans une plage de 40 % à 60 % d'une tension de circuit intermédiaire nominale, et/ou dans une plage de 400 V à 700 V,
- qu'une ou la deuxième valeur limite de tension de circuit intermédiaire pouvant être prédéterminée se situe dans une plage de 30 % à 40 % de la tension de circuit intermédiaire nominale, et/ou dans une plage de 300 V à 400 V,
- qu'une ou la troisième valeur limite de tension de circuit intermédiaire pouvant être prédéterminée se situe dans une plage de 5 % à 20 % de la tension de circuit intermédiaire nominale, et/ou dans une plage de 50 V à 200 V et
- qu'une ou la valeur nulle est inférieure à la troisième valeur limite de tension de circuit intermédiaire pouvant être prédéterminée, en particulier inférieure à 2 %, en particulier inférieure à 1 % de la tension de circuit intermédiaire nominale, et/ou inférieure à 20 V, en particulier inférieure à 10 V.

10. Procédé selon l'une quelconque des revendications précédentes, **caractérisé en ce que**
- pour chauffer le générateur (202), l'éolienne (100), en particulier le système convertisseur (200), est déconnectée du réseau d'alimentation électrique (204).

11. Éolienne (100) préparée pour
chauffer un générateur (202) d'une éolienne (100) lors ou avant le démarrage de l'éolienne (100),
dans lequel une commande d'installation (103) est prévue à cet effet sur laquelle un procédé de chauffage est mis en œuvre, dans lequel
- le générateur (202) est un générateur synchrone à aimant permanent (PMG) qui est réalisé pour générer un courant statorique (I_{S}), dans lequel le courant statorique (I_{S}) présente au moins un courant triphasé, et
- l'éolienne (100) est réalisée comme une éolienne sans engrenage et est connectée à un réseau d'alimentation électrique (204) pour injecter de la puissance électrique dans le réseau d'alimentation électrique (204), et l'éolienne comprend :
- un rotor (106) avec des pales de rotor (108), qui peut fonctionner à une vitesse de rotation variable,
- un système convertisseur (200),
- qui est relié au générateur (202) pour commander le générateur (202), et
- qui est relié au réseau d'alimentation électrique (204) pour injecter dans le réseau d'alimentation électrique (204) la puissance électrique qui a été générée par le générateur (202), et
le procédé comprenant
- la rotation du rotor (106) à une faible vitesse de rotation en dessous d'une première limite de vitesse de rotation
- le fonctionnement du système convertisseur (200) de telle sorte que
- le générateur (202) génère le courant statorique (I_{S}) et la puissance électrique, et
- aucune puissance électrique n'est injectée dans le réseau d'alimentation électrique (204), dans lequel
- le courant statorique (I_{S}), au moins une partie de celui-ci, circule sensiblement à travers le générateur (202) et le système convertisseur (200) pour consommer de la puissance au moins dans des enroulements de stator du générateur (202) pour réchauffer ainsi le générateur (202),
**caractérisé en ce que**
- pour le chauffage, le générateur (202) est commandé par le système convertisseur (200) en utilisant une commande d'affaiblissement de champ pour commander un couple de générateur inférieur à une première valeur limite de couple de rotation prédéterminée qui est inférieure à un couple nominal du générateur (202), dans lequel le couple nominal est en particulier supérieur à la première valeur limite de couple de rotation prédéterminée d'au moins le facteur 2, en particulier d'au moins le facteur 10.

12. Éolienne (100) selon la revendication 11, **caractérisée en ce que** l'éolienne (100), en particulier la commande d'installation (103), est mise au point pour exécuter un procédé selon l'une quelconque des revendications 1 à 10.
